# EUROPEAN PATENT APPLICATION

(11) **EP 4 847 318 A1**
(43) Date of publication of application: **02.12.2026**
(21) Application number: 26166596.2
(22) Date of filing: 23.03.2026
(51) Int. Cl.: B60Q 1/34, B60Q 1/38, B60Q 1/46, B60Q 1/50

(54) **MONITORING LANE KEEPING**

(30) Priority: 28.05.2025 SE 2550330
(71) Applicant: Volvo Truck Corporation, 405 08 Göteborg (SE)
(72) Inventor: CHAVRIER, Philemon, 38230 TIGNIEU JAMEYZIEU (FR); LAPERRIERE, Renaud, 69006 LYON (FR)
(74) Representative: Kransell & Wennborg KB

(57) **Abstract**

In an aspect, a computer system (14) configured to monitor lane keeping of a vehicle (10) is provided. The computer system comprises processing circuitry (11) configured to detect (S101) vehicle movement causing crossing of at least one lane marking (30); and in response thereto to cycle (S102) between activation of hazard lights (20, 21, 22, 23) and turn signal indicators (20, 21).

## Description

### TECHNICAL FIELD

The disclosure relates to monitoring of lane keeping. In particular aspects, the disclosure relates to alerting other road users of a vehicle switching lanes. The disclosure can be applied in vehicles such as cars, busses, light-weight trucks, mid-weight trucks, heavy-duty trucks, construction equipment and motorcycles. Although the disclosure may be described with respect to a particular vehicle, the disclosure is not restricted to any particular vehicle.

### BACKGROUND

Driver assistance systems, such as lane keeping assistance functions, are increasingly used to improve road safety and reduce driver workload. These systems typically rely on vehicle sensors such as lidar sensors, radar sensors, cameras, etc., to detect lane boundaries and help maintain the vehicle within a designated lane.

Some known systems are configured to detect when the vehicle departs from a lane, particularly when crossing solid lane markings that should not be crossed under normal driving conditions. In such situations, the systems may trigger warnings to the driver or activate hazard warning lights to alert other road users of a potential emergency or abnormal vehicle behavior.

There is a need for improved signaling behavior in such scenarios that provides clearer communication to nearby drivers, especially in cases where traffic laws are violated due to driver error or emergency avoidance.

### SUMMARY

According to a first aspect of the disclosure, there is provided a computer system configured to monitor lane keeping of a vehicle, the computer system comprising processing circuitry configured to detect vehicle movement causing crossing of at least one lane marking; and in response thereto cycle between activation of hazard lights and turn signal indicators.

The first aspect of the disclosure may seek to resolve an issue of how to provide clearer signaling to surrounding road users when a vehicle unintentionally deviates from its lane, particularly in situations involving crossing of solid lane markings in violation of traffic rules. A technical benefit may include enabling dynamic and context-aware signaling behavior that enhances communication of abnormal vehicle behavior, thereby improving road safety and driver awareness.

The first aspect of the disclosure may seek to resolve an issue of how to ensure that a vehicle remains reliably at standstill in safety-critical situations, particularly when unintended torque may be applied to the drivetrain despite braking. A technical benefit may include enabling early detection of torque-induced movement and dynamic prevention of propulsion, thereby improving vehicle safety, especially in contexts involving autonomous operation, human-machine interaction, or heavy vehicle environments.

In some examples, the computer system further comprises at least one sensor configured to enable detection of the lane marking crossing. A technical benefit may include enabling the system to autonomously perceive road boundaries, reducing reliance on manual input or pre-mapped data.

In some examples, the at least one sensor comprises one or more of a radar device, a lidar device, and a camera device. A technical benefit may include providing robust and redundant sensing capabilities under diverse environmental and traffic conditions.

In some examples, detecting the lane marking crossing comprises determining whether vehicle movement causes crossing of a single or double solid lane marking in violation of applicable traffic rules. A technical benefit may include allowing the system to distinguish between permitted and impermissible maneuvers, enhancing context-aware response.

In some examples, the computer system is configured to perform the signal cycling in a predetermined temporal sequence. A technical benefit may include ensuring consistent and recognizable signaling behavior for surrounding road users.

In some examples, the computer system is configured to cycle by activating the hazard lights for a fixed time interval followed by activation of the turn signal indicators for a fixed time interval. A technical benefit may include providing a structured signal pattern that conveys the vehicle's abnormal state in a clearer, staged manner.

In some examples, the computer system is configured to cycle by activating the turn signal indicators for a first time interval, followed by activation of the hazard lights for a second, shorter time interval. A technical benefit may include emphasizing directional intent before escalating to a general hazard warning, improving driver communication.

In some examples, the computer system is configured to cycle by activating the hazard lights for a first, longer time interval, followed by activation of the turn signal indicators for a second, shorter time interval. A technical benefit may include prioritizing alerting nearby traffic before resuming direction-specific signaling.

In some examples, the computer system is configured to vary the duration of activation of the hazard lights in successive cycles to indicate increasing urgency or prolonged deviation from a lane. A technical benefit may include introducing adaptive signalling that reflects the persistence or escalation of abnormal vehicle behaviour.

In some examples, the computer system is configured to activate the turn signal indicators to at least partially overlap with the hazard lights during a portion of the cycle. A technical benefit may include enhancing visibility and interpretability of the signal pattern by combining directional and warning cues.

In some examples, the temporal sequence is dynamically determined based on operating conditions. A technical benefit may include enabling context-sensitive signalling that adapts in real time to driving environment and behaviour.

In some examples, the operating conditions comprise a measured speed of the vehicle, and the temporal sequence is adjusted such that higher vehicle speeds result in shorter activation intervals. A technical benefit may include increasing the frequency of signalling at higher speeds, ensuring timely communication to other road users.

In some examples, the operating conditions comprise a duration for which the vehicle remains outside the permitted lane, and the hazard light activation phase increases over time. A technical benefit may include reflecting the seriousness of the deviation through progressive signalling intensity.

In some examples, the operating conditions comprise proximity to one or more surrounding vehicles, and the temporal sequence is adjusted such that closer proximity triggers shorter or more frequent signal cycles. A technical benefit may include enhancing situational awareness in dense traffic and reducing the risk of collision due to undetected lane departure.

In some examples, the computer system is configured to update the temporal sequence in real time during the cycling process based on continuously received sensor input. A technical benefit may include allowing the system to respond instantly to changing conditions, ensuring optimal signalling at all times.

In some examples, the computer system is configured to repeat the cycling of the hazard lights and the turn signal indicators until the vehicle has returned to a lane in which it is permitted to travel. A technical benefit may include maintaining clear communication until the abnormal condition has been resolved, improving continuity of signalling.

In some examples, a vehicle is provided comprising the computer system of the first aspect.

According to a second aspect of the disclosure, there is provided a method of a computer system for monitoring lane keeping of a vehicle, the method comprises detecting vehicle movement causing crossing of at least one lane marking; and in response thereto cycling between activation of hazard lights and turn signal indicators.

In some examples, a computer program product is provided comprising program code for performing, when executed by the processing circuitry, the method of the second aspect.

In some examples, a non-transitory computer-readable storage medium is provided comprising instructions, which when executed by the processing circuitry, cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3 shows a flowchart illustrating an example of monitoring lane keeping according to the present disclosure.
FIG. 4 illustrates a truck crossing a solid lane marking and providing an alert accordingly according to the present disclosure.
FIG. 5 is a schematic diagram of a computer system for implementing examples disclosed herein.

### DETAILED DESCRIPTION

Aspects set forth below represent the necessary information to enable those skilled in the art to practice the disclosure.

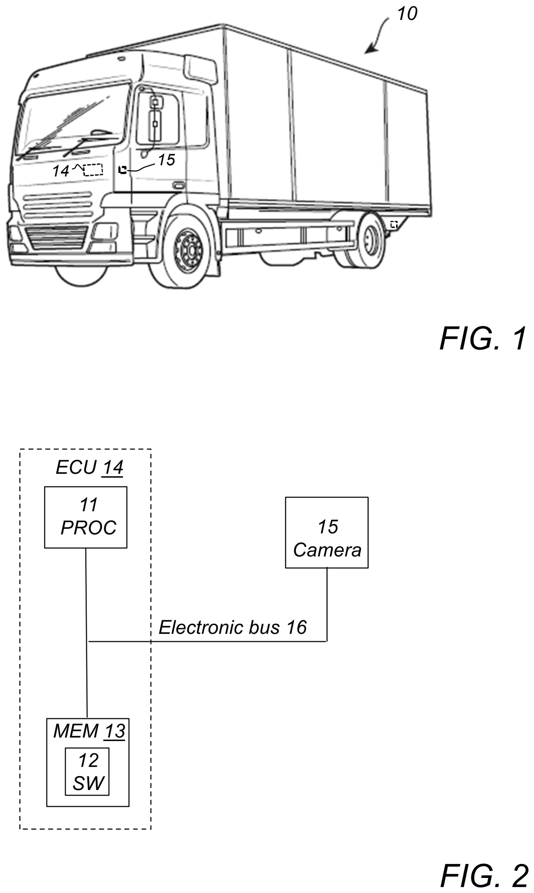

FIG. 1 illustrates a vehicle in the form of a truck 10 in which examples of the present disclosure may be implemented, the truck 10 being equipped with a computer system 14, e.g. in the form of a so-called Electronic Control Unit (ECU) controlling operation of the truck 10. For detecting surrounding vehicles, objects and individuals, the ECU 14 is typically in communicative connection with one or more sensors 15 of the truck 10, such as e.g., radar, lidar, cameras, etc., for monitoring the surroundings of the vehicle and thus to detect surrounding vehicles, objects, lane markings and individuals. In this example, the surroundings are monitored by a camera 15. Although the vehicle 10 in FIG. 1 is depicted as a heavy-duty truck, examples of the present disclosure may be implemented in other types of vehicles, such as in passenger cars, busses, light-duty trucks, mid-duty trucks, construction equipment, motorcycles, marine vessels, etc. As is understood, the vehicle 10 may be capable of partly or full autonomous driving or provided with adaptive cruise control (ACC).

FIG. 2 shows an exemplary system diagram of the computer system 14 with which the truck 10 of FIG. 1 is equipped according to the present disclosure. The computer system 14 will in the following be exemplified by an ECU 14.

The ECU 14 generally comprises processing circuitry (PROC) 11 and a storage medium (MEM) 13 associated with the microprocessor, such as a Random Access Memory (RAM), a Flash memory or a hard disk drive. One or more computer programs (SW) 12 may be stored in the storage medium 13.

The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc.

Further shown in FIG. 2 is the camera 15 used for object detection. As is well-known, the object detection undertaken by the ECU 14 is performed by collecting data from both the camera 15 and performing appropriate processing of the collected data.

Communication between the various devices illustrated in FIG. 2 may occur via an electronic communication bus 16 such as e.g., a Controller Area Network (CAN) bus, a Local Interconnect Network (LIN) bus, an Ethernet bus, etc. Alternatively, wireless communication may occur between the devices.

As previously mentioned, in case the ECU 14 of truck 10 determines that a driver is operating a vehicle inconsistent with traffic laws (e.g., changing lanes across a single solid line (Europe) or double solid line (the US)), hazard warning lights may be activated to alert other road users of a potential emergency or abnormal vehicle behavior. However, there is a need for improved signaling behavior in such scenarios that provides clearer communication to nearby drivers, especially in cases where traffic laws are violated due to driver error or emergency avoidance.

To address this issue, a system is provided that enhances the clarity of vehicle signalling behaviour during abnormal or traffic-rule-violating lane departures.

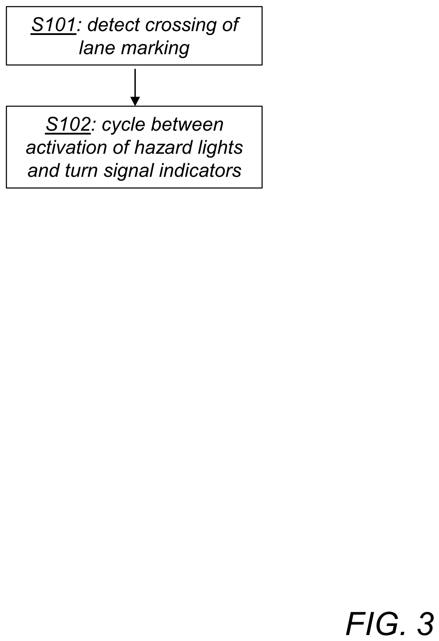

FIG. 3 shows a flowchart illustrating a method of monitoring lane keeping of a vehicle according to an example of the disclosure.

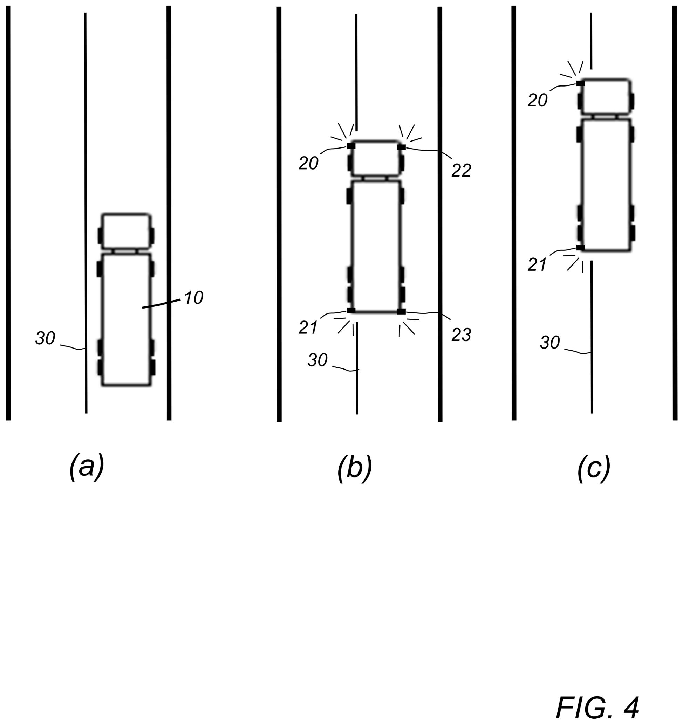

Reference will further be made to FIG. 4a, 4b and 4c illustrating an example signaling sequence executed by the ECU 14 of the truck 10 in response to a lane marking violation. As shown in FIG. 4a, the truck 10 travels a lane bordered by a single solid line 30, which under applicable traffic regulations should not be crossed.

In FIG 4b, the truck 10 nevertheless crosses the solid line 30, which crossing is detected in S101 by the ECU 14 based on data collected by the camera 15. In response to detecting the crossing of the solid line 30, the ECU 14 cycles between activation of hazard lights (illustrated in FIG. 4b by all four turn signal indicators 20, 21, 22, 23 being activated) and the turn signal indicators (illustrated in FIG. 4c by the two left-side turn signal indicators 20, 21 being activated). In an example, the cycling is performed in a predetermined temporal sequence in response to the detected crossing. For instance, the hazard lights 20, 21, 22, 23 may be activated for 3-4 seconds before the left-side turn signal indicators 20, 21 are activated for 3-4 seconds before the cycle repeats, at least until the truck moves back into the right-hand lane and no longer crosses the solid line 30. In another example, the temporal sequence is dynamically determined based on operating conditions.

Now, technical benefits of the example illustrated with reference to FIG. 3 and FIG. 4a-c are that (a) nearby drivers are warned via hazard lights (FIG. 4b) and (b) the intended direction of the truck 10 is indicated via turn signals (FIG. 4c). As is understood, while this exemplifying embodiment shows hazard lights first being activated followed by the left-side turn signals, it may be envisaged that the order of activation is reversed. Either way, using the proposed light cycling as a combined signaling scheme to convey both warning and intended travel direction.is highly advantageous since clarity of vehicle intent is improved, particularly in situations involving unintentional or prohibited lane departures.

Various examples may employ different predetermined temporal sequences for cycling between the hazard lights 20, 21, 22, 23 and the left-side turn signal indicators 20, 21, depending on contextual or preconfigured parameters. In one example, the ECU 14 may cause alternation in a fixed interval pattern, where the hazard lights are activated for 3 seconds, followed by activation of the left-side turn signal indicators for 3 seconds, and the sequence is then repeated. This simple and predictable pattern may be suitable for general scenarios where the vehicle remains outside its designated lane for an extended period.

In another embodiment, a direction-prioritized sequence may be applied, such as activating the left-side turn signal indicators 20, 21 for 2 seconds, followed by the hazard lights 20, 21, 22, 23 for 1 second, in a repeating cycle. This may be preferable in situations where it is important to emphasize the vehicle's intended direction of travel, such as when executing a deliberate maneuver that may nevertheless violate traffic rules.

Conversely, a warning-prioritized sequence may emphasize the hazardous nature of the maneuver. In such a case, the hazard lights 20, 21, 22, 23 may be activated by the ECU for 5 seconds, followed by the left-side turn signal indicators 20, 21 for only 1 second, and the cycle then repeats. This configuration may be suited for unexpected or potentially dangerous movements that require enhanced awareness by surrounding drivers.

An alternative example may implement an escalating cycle, where the duration of the hazard light phase increases with each repetition. For example, the first cycle may include 2 seconds of the hazard lights 20, 21, 22, 23 and 2 seconds of the left-side turn signals 20, 21, followed by 3 seconds of the hazard lights and 2 seconds of the left-side turn signals, then 4 seconds of the hazard lights and 2 seconds of the left-side turn signals, and so on. This approach may visually communicate increasing urgency or the prolonged nature of the maneuver.

In yet another example, a partial overlap sequence may be applied by the ECU 14 to create a more fluid transition between warning and directional signaling. For instance, the hazard lights 20, 21, 22, 23 may be activated for 3 seconds, and during the final second of this interval, the left-side turn signal indicators 20, 21 may begin flashing. The hazard lights are then deactivated, and the left-side turn signal remains active for an additional 2 seconds. The entire sequence may then repeat. Such a pattern may help convey both hazard and intent in a manner that appears natural to other road users.

As mentioned, the temporal sequence used to cycle between hazard lights 20, 21, 22, 23 and turn signal indicators 20, 21 may be dynamically determined based on operating conditions of the truck 10. For example, the ECU 14 may adjust the length or pattern of the light activation phases in real time depending on contextual factors relevant to safety and visibility.

In an example, the sequence is adjusted based on the speed of the truck 10. At higher speeds, shorter activation intervals may be used to ensure that signals remain noticeable without introducing excessive distraction or delay. Conversely, longer intervals may be applied at lower speeds, where driver reaction times and visual attention can accommodate slower cycling.

In another example, the ECU 14 takes into account the duration for which the truck 10 remains outside a permitted lane. If the truck 10 has been outside the correct lane for an extended period, the duration of the hazard light activation phase may increase over time to reflect the growing urgency of the situation.

In a further example, the ECU 14 may monitor proximity to surrounding vehicles. When the truck 10 is close to other road users, the temporal sequence may be adjusted to use shorter or more frequent signal cycles to improve visibility and ensure surrounding drivers are promptly alerted to the maneuver.

In yet an example, the ECU may be configured to update the temporal sequence in real time based on continuously received sensor input. This enables the signaling behavior to adapt responsively to changes in traffic context, environmental conditions, or driver behavior, thereby enhancing the effectiveness of the communication conveyed by the cycling light patterns.

In an example, the ECU 14 is further configured to repeat the cycling between activation of the hazard lights 20, 21, 22, 23 and the turn signal indicators 20, 21 until the truck 10 has returned to the lane in which it is permitted to travel. For example, if the truck 10 crosses the solid lane marking 30 in violation of applicable traffic regulations, the light cycling sequence may continue as long as the truck 10 remains outside the permitted lane. Once the ECU 14 determines that the vehicle has re-entered the appropriate lane, the repeated cycling is discontinued. This behavior ensures that the combined warning and directional signaling persists only during the abnormal or unauthorized maneuver, thereby improving clarity and reducing potential distraction for surrounding road users.

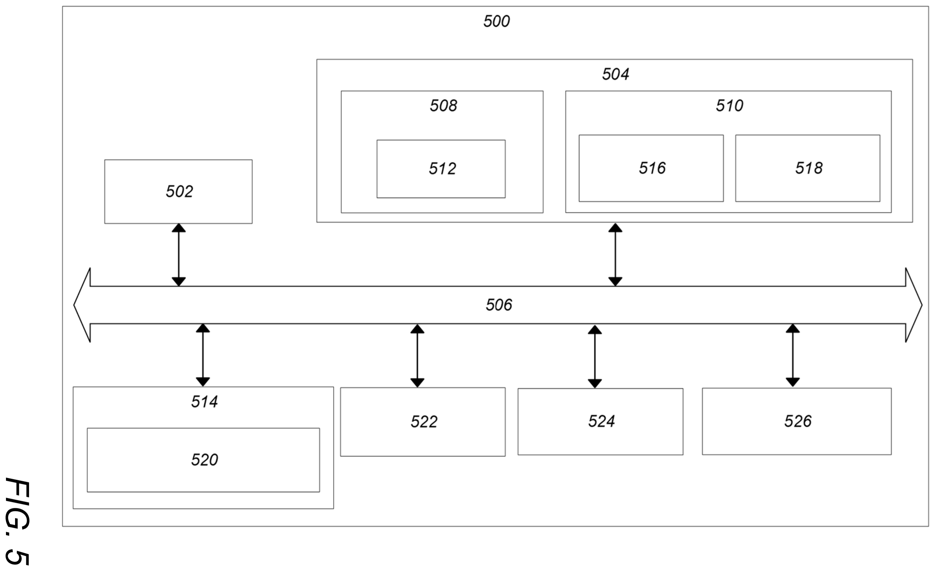

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include a processor device 502 (may also be referred to as a control unit), a memory 504, and a system bus 506. The computer system 500 may include at least one computing device having the processor device 502. The system bus 506 provides an interface for system components including, but not limited to, the memory 504 and the processor device 502. The processor device 502 may include any number of hardware components for conducting data or signal processing or for executing computer code stored in memory 504. The processor device 502 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processor device 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with a processor device 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program product 520 stored on a transitory or non-transitory computer-usable or computer-readable storage medium (e.g., single medium or multiple media), such as the storage device 514, which includes complex programming instructions (e.g., complex computer-readable program code) to cause the processor device 502 to carry out actions described herein. Thus, the computer-readable program code can comprise software instructions for implementing the functionality of the examples described herein when executed by the processor device 502. The processor device 502 may serve as a controller or control system for the computer system 500 that is to implement the functionality described herein.

The computer system 500 also may include an input device interface 522 (e.g., input device interface and/or output device interface). The input device interface 522 may be configured to receive input and selections to be communicated to the computer system 500 when executing instructions, such as from a keyboard, mouse, touch-sensitive surface, etc. Such input devices may be connected to the processor device 502 through the input device interface 522 coupled to the system bus 506 but can be connected through other interfaces such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may also include a communications interface 526 suitable for communicating with a network as appropriate or desired.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.
Example 1. A computer system (14) configured to monitor lane keeping of a vehicle (10), the computer system comprising processing circuitry (11) configured to: detect (S101) vehicle movement causing crossing of at least one lane marking (30); and in response thereto cycle (S102) between activation of hazard lights (20, 21, 22, 23) and turn signal indicators (20, 21).
Example 2. The computer system (14) of example 1, further comprising at least one sensor (15) configured to enable detection of the lane marking crossing.
Example 3. The computer system (14) of any one of examples 1 or 2, wherein the at least one sensor comprises one or more of a radar device, a lidar device and a camera device.
Example 4. The computer system (14) of any one of the preceding examples, wherein the detecting (S101) of the lane marking crossing comprises determining whether the vehicle movement causes crossing of a single or double solid lane marking (30) in violation of applicable traffic rules.
Example 5. The computer system (14) of any one of the preceding examples, wherein the processing circuitry (11) is configured to perform the cycling (S102) in a predetermined temporal sequence.
Example 6. The computer system (14) of example 5, wherein the processing circuitry (11) is configured to cycle by activating the hazard lights (20, 21, 22, 23) for a fixed time interval followed by activation of the turn signal indicators (20, 21) for a fixed time interval.
Example 7. The computer system (14) of any one of examples 5 or 6, wherein the processing circuitry (11) is configured to cycle by activating the turn signal indicators (20, 21) for a first time interval, followed by activation of the hazard lights (20, 21, 22, 23) for a second, shorter time interval.
Example 8. The computer system (14) of any one of examples 5-7, wherein the processing circuitry (11) is configured to cycle by activating the hazard lights (20, 21, 22, 23) for a first, longer time interval, followed by activation of the turn signal indicators (20, 21) for a second, shorter time interval.
Example 9. The computer system (14) of any one of examples 5-8, wherein the processing circuitry (11) is configured to vary the duration of activation of the hazard lights (20, 21, 22, 23) in successive cycles to indicate increasing urgency or prolonged deviation from a lane.
Example 10. The computer system (14) of any one of examples 5-9, wherein the processing circuitry (11) is configured to activate the turn signal indicators (20, 21) to at least partially overlap with the hazard lights (20, 21, 22, 23) during a portion of the cycle.
Example 11. The computer system (14) of any one of examples 1-4, wherein the processing circuitry (11) is configured to perform the cycling (S102) in a temporal sequence being dynamically determined based on operating conditions.
Example 12. The computer system (14) of example 11, wherein the operating conditions comprise a measured speed of the vehicle (10), and the temporal sequence is adjusted such that higher vehicle speeds result in shorter activation intervals.
Example 13. The computer system (14) of any one of examples 11 or 12, wherein the operating conditions comprise a duration for which the vehicle (10) remains outside the permitted lane, and the hazard light activation phase increases over time.
Example 14. The computer system (14) of any one of examples 11-13, wherein the operating conditions comprise proximity to one or more surrounding vehicles, and the temporal sequence is adjusted such that closer proximity triggers shorter or more frequent signal cycles.
Example 15. The computer system (14) of any one of examples 11-14, wherein the processing circuitry (11) is configured to update the temporal sequence in real time during the cycling process based on continuously received sensor input.
Example 16. The computer system (14) of any one of the preceding examples, wherein the processing circuitry (11) is configured to repeat the cycling of the hazard lights (20, 21, 22, 23) and the turn signal indicators (20, 21) until the vehicle (10) has returned to a lane in which it is permitted to travel.
Example 17. A vehicle (10) comprising the computer system (14) of any one of examples 1-16.
Example 18. A method of a computer system (14) of monitoring lane keeping of a vehicle (10), comprising: detecting (S101) vehicle movement causing crossing of at least one lane marking (30); and in response thereto cycling (S102) between activation of hazard lights (20, 21, 22, 23) and turn signal indicators (20, 21).
Example 19. A computer program product comprising program code (13) for performing, when executed by the processing circuitry (11), the method of example 18.
Example 20. A non-transitory computer-readable storage medium (12) comprising instructions (13), which when executed by the processing circuitry (11), cause the processing circuitry (11) to perform the method of example 18.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (14) configured to monitor lane keeping of a vehicle (10), the computer system comprising processing circuitry (11) configured to:
detect (S101) vehicle movement causing crossing of at least one lane marking (30); and in response thereto
cycle (S102) between activation of hazard lights (20, 21, 22, 23) and turn signal indicators (20, 21).

2. The computer system (14) of claim 1, wherein the processing circuitry (11) is configured to perform the cycling (S102) in a predetermined temporal sequence.

3. The computer system (14) of claim 2, wherein the processing circuitry (11) is configured to cycle by activating the hazard lights (20, 21, 22, 23) for a fixed time interval followed by activation of the turn signal indicators (20, 21) for a fixed time interval.

4. The computer system (14) of any one of the claims 2-3, wherein the processing circuitry (11) is configured to cycle by activating the turn signal indicators (20, 21) for a first time interval, followed by activation of the hazard lights (20, 21, 22, 23) for a second, shorter time interval.

5. The computer system (14) of any one of claims 2-4, wherein the processing circuitry (11) is configured to cycle by activating the hazard lights (20, 21, 22, 23) for a first, longer time interval, followed by activation of the turn signal indicators (20, 21) for a second, shorter time interval.

6. The computer system (14) of any one of claims 2-5, wherein the processing circuitry (11) is configured to vary the duration of activation of the hazard lights (20, 21, 22, 23) in successive cycles to indicate increasing urgency or prolonged deviation from a lane.

7. The computer system (14) of claim 1, wherein the processing circuitry (11) is configured to perform the cycling (S102) in a temporal sequence being dynamically determined based on operating conditions.

8. The computer system (14) of claim 7, wherein the operating conditions comprise a measured speed of the vehicle (10), and the temporal sequence is adjusted such that higher vehicle speeds result in shorter activation intervals.

9. The computer system (14) of any one of claims 7-8, wherein the operating conditions comprise a duration for which the vehicle (10) remains outside the permitted lane, and the hazard light activation phase increases over time.

10. The computer system (14) of any one of claims 7-9, wherein the operating conditions comprise proximity to one or more surrounding vehicles, and the temporal sequence is adjusted such that closer proximity triggers shorter or more frequent signal cycles.

11. The computer system (14) of any one of claims 7-10, wherein the processing circuitry (11) is configured to update the temporal sequence in real time during the cycling process based on continuously received sensor input.

12. A vehicle (10) comprising the computer system (14) of any of claims 1-11.

13. A method of a computer system (14) of monitoring lane keeping of a vehicle (10), comprising:
detecting (S101) vehicle movement causing crossing of at least one lane marking (30); and in response thereto
cycling (S102) between activation of hazard lights (20, 21, 22, 23) and turn signal indicators (20, 21).

14. A computer program product comprising program code (13) for performing, when executed by the processing circuitry (11), the method of claim 13.

15. A non-transitory computer-readable storage medium (12) comprising instructions (13), which when executed by the processing circuitry (11), cause the processing circuitry (11) to perform the method of claim 13.
